# EUROPEAN PATENT APPLICATION

(11) **EP 3 098 064 A1**
(43) Date of publication of application: **30.11.2016**
(21) Application number: 15762905.6
(22) Date of filing: 27.02.2015
(51) Int. Cl.: B29C 67/00, B22F 3/105, B28B 13/02, B29C 31/02, B33Y 30/00

(54) **POWDER RECOATER**

(71) Applicant: Technology Research Association For Future Additive Manufacturing, Chuo-ku Tokyo (JP)
(72) Inventor: MIYANO Hideaki, Yokohama-shi Kanagawa 222-0033 (JP); OOBA Yoshikazu, Yokohama-shi Kanagawa 222-0033 (JP); KATOU Yousuke, Yokohama-shi Kanagawa 222-0033 (JP); SUZUKI Koukichi, Yokohama-shi Kanagawa 222-0033 (JP); DAICHO Yuya, Yokohama-shi Kanagawa 222-0033 (JP)
(74) Representative: TBK
(86) International application number: PCT/JP2015/055965
(87) International publication number: WO 2016/135975

(57) **Abstract**

The spread amount of a powder to be spread from a powder recoater is adjusted. The powder recoater according to this invention includes a hopper that stores a powder. The powder recoater according to this invention also includes a cylindrical powder supplier that has a side surface close to or in contact with the bottom surface of the hopper and includes a supply path for the powder. The powder recoater according to this invention further includes a pivoting unit that causes the powder supplier to pivot. In the powder recoater according to this invention, the center axis of the supply path crosses the center axis of the powder supplier.

## Description

### TECHNICAL FIELD

The present invention relates to a powder recoater.

### BACKGROUND ART

In the above technical field, patent literature 1 discloses a technique of vibrating a recoater having an opening, and spreading a powder. Patent literature 2 discloses a technique of spreading a powder by applying a positive or negative pressure to a recoater having an opening.

### CITATION LIST

### PATENT LITERATURE

Patent literature 1: International Publication WO 2005/080010
Patent literature 2: International Publication WO 2010/149133

### SUMMARY OF THE INVENTION

### TECHNICAL PROBLEM

However, the techniques described in these literatures cannot adjust the spread amount of a powder.

The present invention enables to provide a technique of solving the above-described problem.

### SOLUTION TO PROBLEM

One aspect of the present invention provides a powder recoater comprising:
a hopper that stores a powder;
a cylindrical powder supplier that has a side surface close to or in contact with a bottom surface of the hopper and includes a supply path for the powder; and
a pivoting unit that causes the powder supplier to pivot,
wherein a center axis of the supply path crosses a center axis of the powder supplier.

### ADVANTAGEOUS EFFECTS OF INVENTION

According to the present invention, the spread amount of a powder can be adjusted.

### BRIEF DESCRIPTION OF DRAWINGS

Fig. 1 is a side view showing the arrangement of a powder recoater according to the first embodiment of the present invention;
Fig. 2 is a side view showing the arrangement of a powder recoater according to the second embodiment of the present invention;
Fig. 3 is a perspective view showing the powder supply portion of the powder recoater according to the second embodiment of the present invention;
Figs. 4 shows the states of spreading a powder by the powder recoater according to the second embodiment of the present invention; and
Fig. 5 is a side view showing the arrangement of a powder recoater according to the third embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

### [First Embodiment]

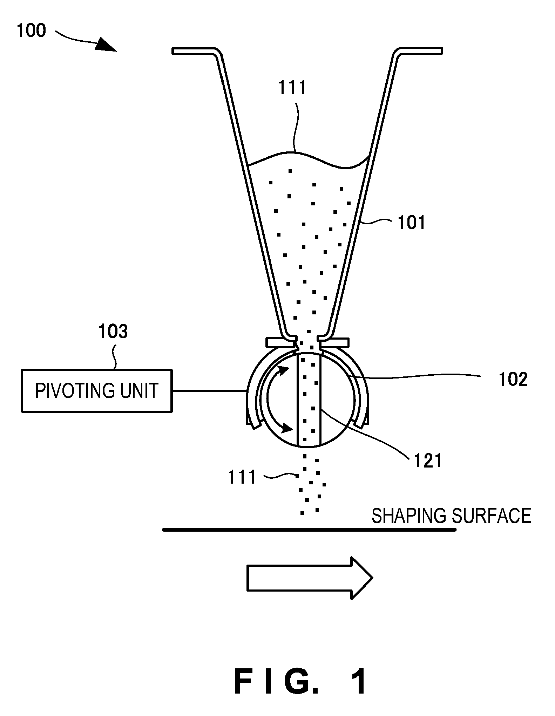

A powder recoater 100 according to the first embodiment of the present invention will be described with reference to Fig. 1. The powder recoater 100 is a device that spreads a powder 111 to a fabricating surface while moving left and right on the fabricating surface.

As shown in Fig. 1, the powder recoater 100 includes a hopper 101, a powder supply portion 102, and a pivoting unit 103. The hopper 101 stores the powder 111. The powder supply portion 102 has a side surface close to or in contact with the bottom surface of the hopper 101. The powder supply portion 102 has a supply path 121 for the powder 111, and has a cylindrical shape. The center axis of the supply path 121 crosses the center axis of the powder supply portion 102. The pivoting unit 103 causes the powder supply portion 102 to pivot.

According to the first embodiment, the powder supply portion 102 pivots, and the spread amount of the powder 111 can be adjusted.

### [Second Embodiment]

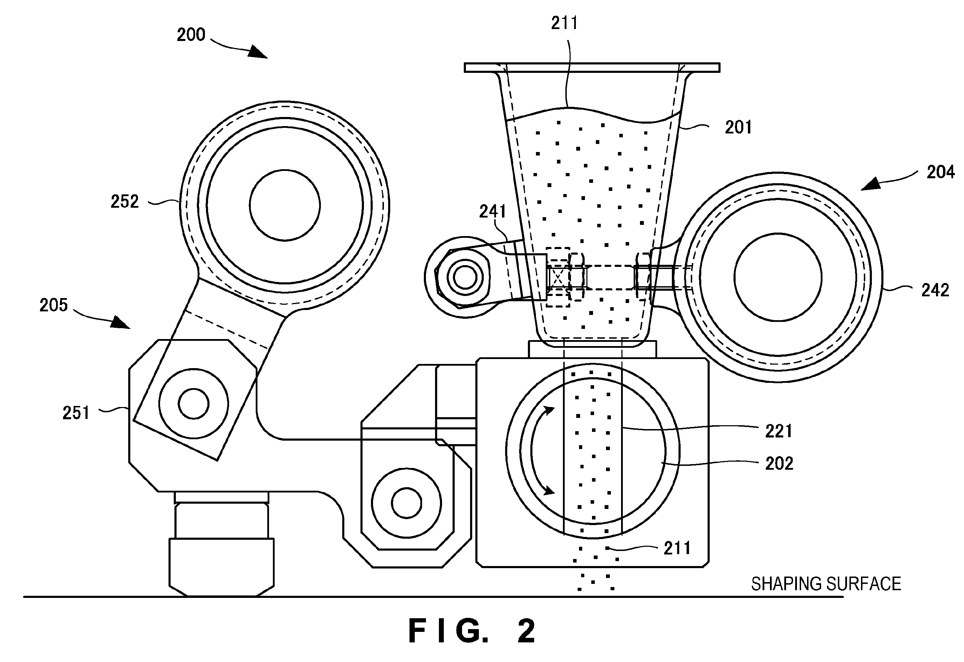

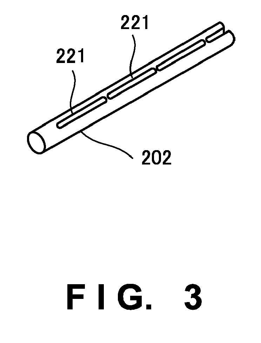

A powder recoater 200 according to the second embodiment of the present invention will be described with reference to Figs. 2 to 4. Fig. 2 is a side view for explaining the arrangement of the powder recoater 200 according to this embodiment. Fig. 3 is a perspective view showing a powder supply portion 102 of the powder recoater 200 according to this embodiment.

The powder recoater 200 is a device that spreads a powder 211 to a fabricating surface while moving on the fabricating surface. The powder recoater 200 includes a hopper 201, the powder supply portion 202, and swing portions 204 and 205. Further, the powder recoater 200 includes a pivoting unit such as a servo motor (not shown).

The hopper 201 stores the powder 211 that is spread to the fabricating surface. Before spreading, the powder 211 is properly supplied in a predetermined amount from, for example, a tank (not shown) that stores the powder 211, and replenishes the hopper 201. The powder 211 is input from an input port at the top of the hopper 201, and supplied to the powder supply portion 202 from a discharge port provided in the bottom surface.

The powder supply portion 202 is provided near the bottom surface of the hopper 201, or provided in contact with the bottom surface. The powder supply portion 202 is a cylindrical member, and a supply path 221 through which the powder 211 passes is provided in the side surface. The supply path 221 is provided so that the center axis of the supply path 221 crosses the center axis of the cylindrical powder supply portion 202.

The supply path 221 is formed by providing a plurality of holes so as to form a slit, but may be formed from a single hole (single slit). The supply path 221 may also be formed by connecting a plurality of members each having a single hole.

The supply path 221 can have any shape as long as the powder 211 can pass, and can have various shapes such as a circle, ellipse, polygon, and slit. A pivoting mechanism (not shown) such as a servo motor is attached to the powder supply portion 202, and the powder supply portion 202 pivots along with the operation of the servo motor. The powder supply portion 202 can be made of an arbitrary material such as a metal (for example, aluminum, iron, or copper), a plastic, or a resin. The amount of a powder to be spread can be adjusted by causing the powder supply portion 202 to pivot.

The swing portion 204 swings the hopper 201 to apply vibrations to the hopper 201 and promote supply of the powder 211 to the supply path 221 of the powder supply portion 202. The swing portion 204 includes a swing arm 241 and a rotation arm 242. The swing arm 241 is connected to the hopper 201. The rotation arm 242 is decentered from the center of rotation. Vibrations generated by rotation of the rotation arm 242 are transferred to the swing arm 241, thereby applying the vibrations to the hopper 201 and promoting the drop of the powder 211.

The swing portion 205 swings the powder supply portion 202 to apply vibrations to the powder supply portion 202 and promote supply (spread) of the powder 211 to the fabricating surface. The swing portion 205 includes a swing arm 251 and a rotation arm 252. The swing arm 251 is connected to the powder supply portion 202. The rotation arm 252 is decentered from the center of rotation. Vibrations generated by rotation of the rotation arm 252 are transferred to the swing arm 251, thereby applying the vibrations to the powder supply portion 202 and promoting the drop of the powder 211.

The powder 211 spread to the fabricating surface is smoothed by a smoothing portion (not shown). The powder 211 spread from the powder supply portion 202 drops from the supply path 221 of the powder supply portion 202, and its thickness is not uniform (constant) in a state in which the powder 211 is spread to the fabricating surface. The smoothing portion thus smooths the surface of the powder 211. For example, the powder 211 may be tapped or smoothed by a roller or the like. After the powder 211 is smoothed, it is irradiated by a laser or the like and hardened, manufacturing a three-dimensional shaped object.

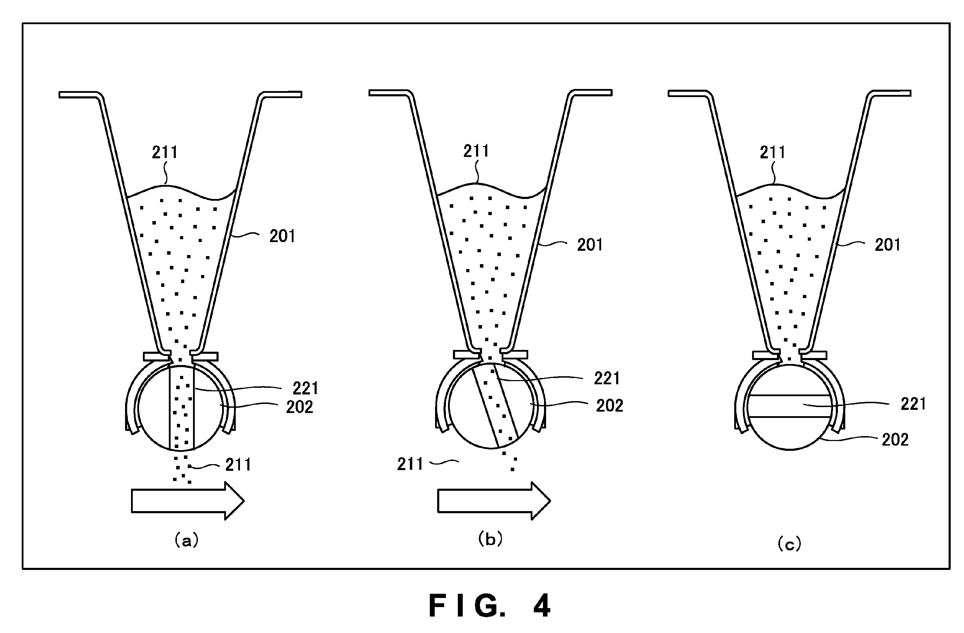

Fig. 4 shows the states of spreading the powder 211 by the powder recoater 200 according to this embodiment. In Fig. 4, (a) is a view showing a state in which the supply path 221 is opened fully and the powder 211 is spread. In Fig. 4, (b) is a view showing a state in which the supply path 221 is opened half and the powder 211 is spread. In Fig. 4, (c) is a view showing a state in which the spread of the powder 211 is stopped.

When the powder 211 is spread in a maximum supply amount, as shown in (a) of Fig. 4, the powder supply portion 202 pivots so as to align the supply path 221 and the discharge port of the hopper 201.

When the powder supply portion 202 pivots to shift the position of the supply path 221 from the position of the discharge port of the hopper 201, as shown in (b) of Fig. 4, the supply amount of the powder 211 can be decreased. As a result, the supply path 221 is inclined to narrow the gap between the hopper 201 and the supply path 221 and limit the supply amount of the powder 211. That is, various recoatings become possible by causing the powder supply portion 202 to pivot, and changing the degree of opening (opening) when the discharge port of the hopper 201 and the supply path 221 communicate straight.

For example, the spread amount of the powder is changed by adjusting the opening. The spread amount can be freely changed so that the thickness of the powder to be spread becomes large at a given portion and small at another portion. More specifically, the powder is normally stacked at a thickness of, for example, 0.3 mm. However, it is easy to stack the powder at a smaller thickness of, for example, 0.1 mm at a location where the accuracy in the direction of thickness is required. That is, the thickness of the powder to be spread can be freely changed. When hardening a desired portion after spreading the powder, for example, energy to be applied is decreased in a method of irradiating the powder with infrared rays and sintering/melting the powder. In a method of spreading a binder from an inkjet head and hardening it, the amount of a liquid in one discharge from the inkjet is decreased, or the discharge interval of the liquid discharged from the inkjet is increased.

A wide range of various types of powders can be handled by decreasing the opening when the size of the particle of a powder is small, and increasing it when the size of the particle of a powder is large. Even in the case of a powder in which particles of various sizes are mixed, the supply amount of the powder can be adjusted by adjusting the opening in accordance with the characteristic of the powder. The powder recoater 200 can handle these powders by one device.

Since the surface property of a powder particle varies in terms of whether the powder is dry or wet, the sphericity of the powder, coating/uncoating, and the like, the adhesion force between particles and the like also vary. Even for powders different in fluidity as the whole powder, the powder supply amount can be adjusted by adjusting the opening in accordance with the characteristics of these powders. For example, the opening is increased for a low-fluidity powder, and decreased for a high-fluidity powder. For example, a high-fluidity powder (for example, a dry powder) is spread first, then the powder is replaced, and a low-fluidity powder (for example, a wet powder) is spread. Even in such a case, the powder recoater 200 can handle powders different in fluidity by one device.

When stopping the supply of the powder 211, as shown in (c) of Fig. 4, the powder supply portion 202 pivots to position the discharge port of the hopper 201 and the supply path 221 so that they do not communicate straight.

According to the second embodiment, the powder supply portion 102 pivots, and the spread amount of the powder 211 can be adjusted. The powder recoater 200 according to the second embodiment can also be used for a three-dimensional fabricating apparatus.

### [Third Embodiment]

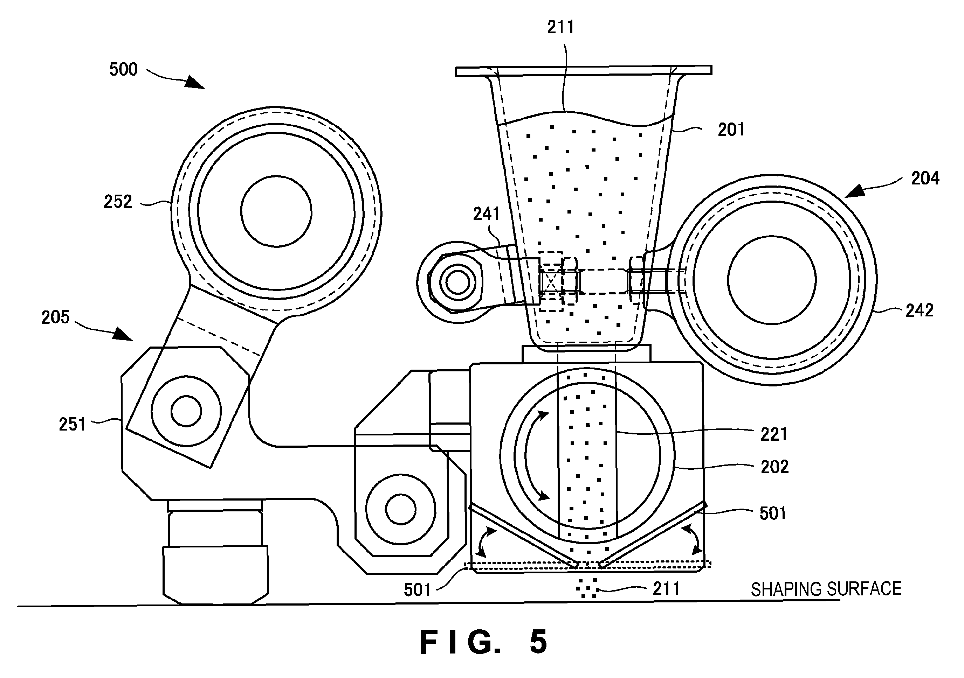

A powder recoater according to the third embodiment of the present invention will be described with reference to Fig. 5. Fig. 5 is a side view for explaining the arrangement of a powder recoater 500 according to this embodiment. The powder recoater 500 according to the third embodiment is different from the powder recoater according to the second embodiment in that it further includes supply amount adjustment portions 501. The remaining arrangement and operation are the same as those in the second embodiment, so the same reference numerals denote the same arrangement and operation and a detailed description thereof will not be repeated.

The supply amount adjustment portions 501 are provided below a powder supply portion 202, and are provided between the powder supply portion 202 and a fabricating surface. A driving unit (not shown) is provided for the supply amount adjustment portions 501 to drive them in directions indicated by arrows. As the driving method of the supply amount adjustment portions 501, the left and right supply amount adjustment portions 501 may perform horizontally symmetrical motions in conjunction with each other, or perform different motions singly.

The supply amount adjustment portions 501 are formed by arranging two plate-like members horizontally symmetrically, and function as shutters. The spread amount of a powder 211 can be adjusted by driving the supply amount adjustment portions 501 and adjusting a gap formed between the left and right supply amount adjustment portions 501. That is, the spread amount of the powder 211 can be increased by increasing the degree of opening (opening) of the shutters. The spread amount of the powder 211 can be decreased by decreasing the degree of opening of the shutters.

Since the supply amount adjustment portions 501 are further provided, double adjustment becomes possible by the two spread amount adjustment portions for the powder 211, that is, the powder supply portion 202 and the supply amount adjustment portions 501. The spread amount of the powder 211 can be more finely adjusted.

According to the third embodiment, the supply amount adjustment portions 501 are provided, and the spread amount of the powder 211 can be more finely adjusted.

### [Other Embodiments]

The present invention has been described above with reference to the embodiments. However, the present invention is not limited to those embodiments. Various changes understandable by those skilled in the art within the scope of the present invention can be made for the arrangements and details of the present invention. The present invention also incorporates a system or apparatus that somehow combines different features included in the respective embodiments.

## Claims

1. A powder recoater comprising:
a hopper that stores a powder;
a cylindrical powder supplier that has a side surface close to or in contact with a bottom surface of said hopper and includes a supply path for the powder; and
a pivoting unit that causes the powder supplier to pivot,
wherein a center axis of the supply path crosses a center axis of said powder supplier.

2. The powder recoater according to claim 1, further comprising a supply amount adjuster that is provided below said powder supplier and adjusts a supply amount of the powder supplied from said powder supplier.

3. The powder recoater according to claim 1 or 2, further comprising a smoother that smooths a spread powder, said smoother being provided below said powder supplier.

4. The powder recoater according to any one of claims 1 to 3, further comprising a vibrator that vibrates said hopper.

5. The powder recoater according to any one of claims 1 to 4, wherein said pivoting unit is a servo motor.

6. A three-dimensional fabricating apparatus using a powder recoater stated in claim 1.
